# EUROPEAN PATENT APPLICATION

(11) **EP 4 509 471 A1**
(43) Date of publication of application: **19.02.2025**
(21) Application number: 23788327.7
(22) Date of filing: 11.04.2023
(51) Int. Cl.: C03B 5/16, C03B 5/235, C03C 1/00

(54) **METHOD FOR PRODUCING GLASS ARTICLE**

(30) Priority: 15.04.2022 JP 2022067458; 10.01.2023 JP 2023001679
(71) Applicant: Nippon Electric Glass Co., Ltd., Otsu-shi, Shiga 520-8639 (JP)
(72) Inventor: ITAZU, Hiroyuki, Otsu-shi, Shiga 520-8639 (JP); ASAI, Kosuke, Otsu-shi, Shiga 520-8639 (JP); TOKUNAGA, Shingo, Otsu-shi, Shiga 520-8639 (JP)
(74) Representative: Tetzner, Michael
(86) International application number: PCT/JP2023/014668
(87) International publication number: WO 2023/199909

(57) **Abstract**

In a melting step (S1) of generating a molten glass (Gm) by heating and melting glass raw materials (Gr) corresponding to raw materials for a glass article in a melting furnace (10), the glass raw materials (Gr) are heated and molten through combustion of fuel (FH) containing hydrogen, and a water vapor partial pressure (Pp) in the melting furnace (10) is set to 80% or less of a total atmospheric pressure (Pt).

## Description

### Technical Field

The present invention relates to a manufacturing method for a glass article.

### Background Art

A manufacturing process for a glass article includes a melting step of heating and melting glass raw materials in a melting furnace. In the melting step, a method of heating and melting glass raw materials in a melting furnace by using a burner that burns fuel to form a flame has been widely used (for example, Patent Literature 1). As the fuel, a hydrocarbon fuel such as a natural gas is generally used. Further, in some cases, combustion heating with a burner and electric heating with an electrode are both performed in the melting step.

A fining agent has been added to the glass raw materials so as to break bubbles formed through melting. Examples of the fining agent include not only tin oxides and antimony, which release an oxygen gas through an oxidationreduction reaction to promote bubble breaking, and fluoride and chloride, which promote bubble breaking through evaporation behavior, but also a sulfate (SO₃) raw material. The sulfate raw material is thermally decomposed by heating, releases an SO₂ gas, and increases bubbles. In the melting step, a foam layer may be formed on a top of a molten glass by an action of the fining agent.

### Citation List

Patent Literature 1: WO 2011/136086 A

### Summary of Invention

### Technical Problem

When the hydrocarbon fuel is used as the fuel to be supplied to the burner, carbon dioxide contained in an exhaust gas generated in the melting step increases. As a result, there arises a problem in that an environmental load increases.

### Summary of Invention

### Technical Problem

Thus, it is conceivable to use, for example, a hydrogen fuel as the fuel to be supplied to the burner. When the hydrogen fuel is burned to form a flame, water is generated as a main product. Hence, it is expected that carbon dioxide contained in an exhaust gas is significantly reduced. Meanwhile, a water vapor partial pressure in the melting furnace is increased because of water generated along with the combustion.

When the hydrogen fuel is supplied to the burner to form a flame, an increase in water vapor partial pressure in the melting furnace causes expansion of air bubbles formed by the action of the fining agent to thereby increase a thickness of the foam layer. The foam layer has a low heat transfer property. Thus, when the thickness of the foam layer is increased, heat of the flame formed by the burner is less likely to be conducted to the molten glass via the foam layer, resulting in a reduction in energy efficiency.

In view of the circumstances described above, a technical object to be achieved by the present invention is to enable efficient and stable generation of a molten glass while reducing carbon dioxide contained in an exhaust gas generated in a melting step.

### Solution to Problem

The above-mentioned object is achieved by the following manufacturing method for a glass article according to the present invention.
(1) Provided is a manufacturing method for a glass article, comprising a melting step of generating a molten glass by heating and melting glass raw materials corresponding to raw materials for a glass article in a melting furnace. In the melting step, the glass raw materials are heated and molten through combustion of fuel containing hydrogen, and a water vapor partial pressure in the melting furnace is set to 80% or less of a total atmospheric pressure.
   As described above, in the present invention, the glass raw materials are heated and molten through the combustion of the fuel containing hydrogen. Thus, carbon dioxide contained in an exhaust gas generated in the melting step can be reduced in comparison to a case in which a hydrocarbon fuel is used as in the related art. Further, in the present invention, the water vapor partial pressure in the melting furnace is set to 80% or less of the total atmospheric pressure. When the glass raw materials are heated and molten through the combustion of the fuel containing hydrogen, water is generated. As a result, the water vapor partial pressure in the melting furnace rises. In particular, when the fuel containing hydrogen is burned as a main fuel, the water vapor partial pressure in the melting furnace significantly rises and a foam layer expands. Regarding this problem, the water vapor partial pressure in the melting furnace is set to 80% or less of the total atmospheric pressure in the present invention. Thus, the expansion of the foam layer on the molten glass can be suppressed. As a result, a reduction in energy efficiency can be suppressed.
(2) In the manufacturing method for a glass article according to the above-mentioned item (1), the glass raw materials may contain carbonate.
   When the glass raw materials containing the carbonate are used as described above, carbon dioxide is generated along with the heating and melting of the glass raw materials. The generation of carbon dioxide allows the water vapor partial pressure in the melting furnace to be reduced.
(3) In the manufacturing method for a glass article according to the above-mentioned item (2), the glass raw materials may contain CaCO₃ as the carbonate, and the glass raw materials may be prepared so that the glass article has a composition with CaO at 5 wt% to 35 wt%.
   When the glass raw materials prepared as described above, more specifically, the glass raw materials that are prepared so that the glass raw materials contain CaCO₃ as the carbonate and the glass article contains CaO at 5 wt% to 35 wt% or more are fed, carbon dioxide can be adequately generated in the melting step. Hence, the water vapor partial pressure in the melting furnace can be reduced.
(4) In the manufacturing method for a glass article according to the above-mentioned item (1) or (2), the glass raw materials may contain SO₃ at 1,000 wtppm or less.
   A thickness of the foam layer on the molten glass can be reduced by regulating a content of SO₃ acting as a fining agent as described above. As a result, a reduction in energy efficiency can be further suppressed.
(5) In the manufacturing method for a glass article according to the above-mentioned items (1) to (4), in the melting step, gas may be supplied into the melting furnace.
   As described above, when the gas (for example, an atmospheric air) is supplied into the melting furnace in the melting step, an atmosphere in the furnace is discharged. Hence, the water vapor partial pressure in the melting furnace can be reduced. Thus, even with glass raw materials containing carbonate at a small content ratio or glass raw materials without containing carbonate, the water vapor partial pressure can be reduced while the heating and melting of the glass raw materials through the combustion of hydrogen are performed. The gas may be supplied into the melting furnace along with the discharge of the atmosphere in the melting furnace with use of an exhaust device of an exhaust gas treatment facility.
(6) In the manufacturing method for a glass article according to the above-mentioned items (1) to (5), in the melting step, a mixed fuel containing the hydrogen and a hydrocarbon fuel may be used.
   When the mixed fuel is used as described above, the amount of water generated along with the combustion can be reduced in comparison to a case in which fuel consisting only of hydrogen is used. Thus, the use of the mixed fuel also allows the water vapor partial pressure in the melting furnace to be reduced.
(7) In the manufacturing method for a glass article according to the above-mentioned items (1) to (6), in the melting step, a maximum thickness dimension of a foam layer formed along with heating and melting of the glass raw materials may be set to 50 mm or smaller.
   When the thickness dimension of a part of the foam layer formed on a top of the molten glass, which has the maximum thickness dimension, at the time of heating and melting (in the melting step) of the glass raw materials is set to 50 mm or smaller, solidification of a part of the foam layer can be reliably prevented. As a result, the foam layer can flow more easily, and micro-bubbles can be continuously released in a smoother manner. Thus, a temperature and a flow rate of the molten glass are further stabilized.
(8) In the manufacturing method for a glass article according to the above-mentioned items (1) to (7), in the melting step, a batch layer corresponding to the glass raw materials supplied into the melting furnace and a foam layer formed along with heating and melting of the glass raw materials may cover 80% to 100% of a surface of a molten glass.
   As described above, the batch layer and the foam layer cover 80% to 100% of the surface of the molten glass, and hence the surface of the molten glass is adequately covered with heat insulating layers. Thus, heat dissipation from the surface of the molten glass can be reduced to thereby improve energy efficiency.
(9) In the manufacturing method for a glass article according to the above-mentioned items (1) to (8), a batch layer corresponding to the glass raw materials supplied into the melting furnace may cover 20% to 70% of a surface of a molten glass.
   As described above, when the batch layer, which also functions as the heat insulating layer, covers 20% to 70% of the surface of the molten glass, the heat dissipation from the surface of the molten glass can be reduced to thereby improve the energy efficiency. Further, with setting of an area to be covered by the batch layer to 70% or less, even when an infurnace condition has changed due to, for example, a change in flow rate and hence the glass raw materials are more liable to stagnate, feeding of the glass raw materials can be continued by causing the batch layer to flow over a region that has not been covered with the batch layer. Thus, the molten glass can be continuously generated in a stable manner.
(10) In the manufacturing method for a glass article according to the above-mentioned items (1) to (9), in the melting step, the fuel containing hydrogen may be subjected to multistage combustion.

When the multistage combustion is performed as described above, a temperature of a flame is decreased to allow a concentration of nitrogen oxides in the exhaust gas to be reduced. In particular, when gas is supplied into the melting furnace by using the exhaust device of the exhaust gas treatment facility, the concentration of nitrogen oxides in the exhaust gas is likely to rise. Thus, in such a case, an effect of the multistage combustion in reducing the concentration of nitrogen oxides contained in the exhaust gas is more noticeable.

### Advantageous Effects of Invention

As described above, according to the present invention, it becomes possible to efficiently and stably generate the molten glass while reducing carbon dioxide contained in the exhaust gas generated in the melting step.

### Brief Description of Drawings

FIG. 1 is a longitudinal sectional view of a melting furnace according to an embodiment of the present invention.
FIG. 2 is a transverse sectional view of the melting furnace taken along the line A-A of FIG. 1.
FIG. 3 is a combustion system diagram of a burner provided to the melting furnace illustrated in FIG. 1.

### Description of Embodiments

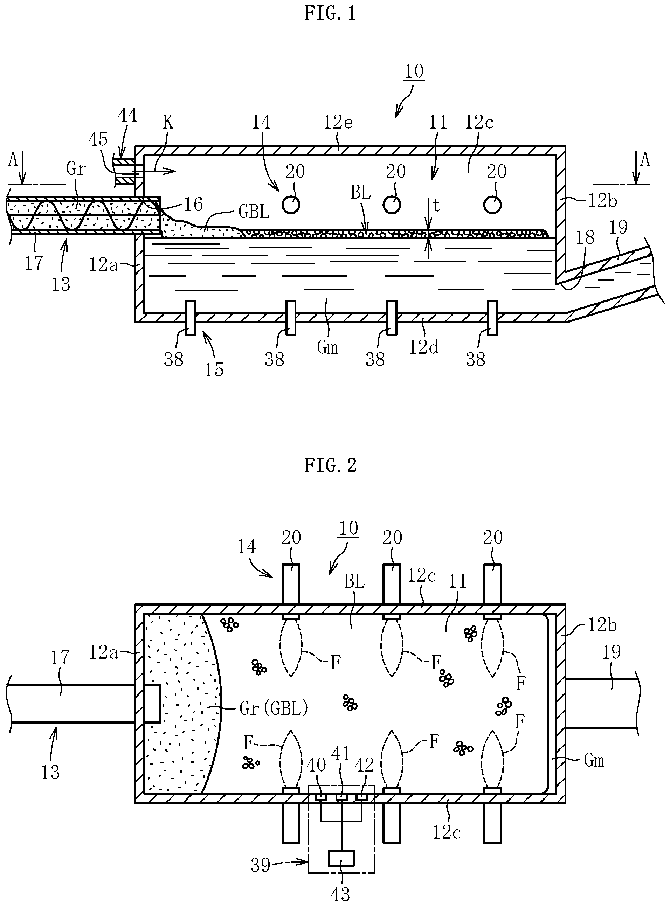

Now, an embodiment of the present invention is described with reference to FIG. 1 to FIG. 3.

A manufacturing apparatus for a glass article according to this embodiment comprises a melting furnace, a fining chamber, a homogenization chamber, and a forming device. The melting furnace is configured to generate a molten glass. In the fining chamber, a fining treatment is performed on the molten glass. In the homogenization chamber, the molten glass, which has been subjected to the fining treatment, is homogenized by stirring or the like. The forming device is configured to form the homogenized molten glass into a predetermined glass article. FIG. 1 is a longitudinal sectional view of a melting furnace 10, which is one element of the manufacturing apparatus. Further, FIG. 2 is a transverse sectional view of the melting furnace 10 illustrated in FIG. 1, which is taken along the line A-A. The manufacturing apparatus having the configuration described above is merely an example, and, for example, a part of the plurality of elements described above may be omitted. Alternatively, the manufacturing apparatus may further comprise elements other than the elements described above.

The melting furnace 10 allows a melting step S1 according to this embodiment to be carried out. The melting furnace 10 is configured to enable generation of a molten glass Gm by melting glass raw materials Gr that are continuously fed into a space (melting space 11) inside the melting furnace 10. More specifically, the melting furnace 10 comprises the melting space 11, a plurality of wall parts 12a to 12e, a raw material supply device 13, and heating devices 14 and 15. The plurality of wall parts 12a to 12e define the melting space 11.

In this case, publicly known raw materials (such as natural raw materials, chemical raw materials, and cullet) can be used as the glass raw materials Gr. In this embodiment, raw materials containing carbonate are used as the glass raw materials Gr. In this case, the glass raw materials are required to be prepared so that, for example, the glass raw materials Gr contain CaCO₃ as carbonate and the glass article corresponding to a completed article has a composition with CaO (more preferably CaO derived from CaCO₃) at 5 wt% to 35 wt% (preferably at 5 wt% to 25 wt%).

A suitable example of the above-mentioned composition may be a D glass, and more suitable example thereof may include an E glass, an NE glass, a C glass, an A glass, and a soda-lime glass. The E glass has a composition comprising, for example, in terms of wt%, 52% to 62% of SiO₂, 10% to 16% of Al₂O₃, 0% to 8% of B₂O₃, 0% to 5% of MgO, 16% to 25% of CaO, and 0% to 2% of R₂O (provided that R represents at least one of Li, Na, and K).

The soda-lime glass has a composition comprising, for example, in terms of wt%, 48% to 70% of SiO₂, 5% to 15% of Al₂O₃, 0% to 5% of MgO, 0% to 5% of CaO, 0% to 15% of BaO, 0% to 15% of SrO, 0% to 5% of ZrO₂, and 0% to 15% of R₂O (provided that R represents at least one of Li, Na, and K).

Sulfur trioxide (SO₃) contained in the glass raw materials acts as a fining agent. A thickness of a foam layer on the molten glass can be reduced by regulating an SO₃ content. In this manner, a reduction in energy efficiency can be further suppressed. In view of a reduction in the thickness of the foam layer, it is preferred that the SO₃ content of the glass raw materials Gr be 1,000 wtppm or less, more preferably 700 wtppm or less, still more preferably 500 wtppm or less, most preferably 400 wtppm or less. Sulfur trioxide, SO₃, is an unavoidable impurity, and is mixed into other constituent raw materials without being intentionally added. Cost increases as the SO₃ content is decreased. Thus, it is preferred that the SO₃ content be set to 200 wtppm or more.

Meanwhile, as the SO₃ content of the glass raw materials Gr is increased, an effect of suppressing expansion of the foam layer on the molten glass, which is achieved by setting a water vapor partial pressure Pp in the melting space 11 to 80% or less of a total atmospheric pressure Pt as described later, becomes more noticeable. In view of the suppression of the expansion of the foam layer, it is preferred that the SO₃ content of the glass raw materials Gr be 200 wtppm or more, more preferably 300 wtppm or more, still more preferably 500 wtppm or more. In this case, it is preferred that an upper limit of the SO₃ content be set to 1,000 wtppm or less.

The wall parts 12a to 12e of the melting furnace 10 are formed of a refractory brick (for example, a zirconia-based electrocast brick, an alumina-based electrocast brick, an alumina-zirconia-based electrocast brick, an AZS (Al-Zr-Si)-based electrocast brick, or a dense fired brick).

A feed port 16 for feeding the glass raw materials Gr is formed in the front wall part 12a of the melting furnace 10. A screw feeder 17 corresponding to the raw material supply device 13 configured to supply the glass raw materials Gr into the space (melting space 11) inside the melting furnace 10 is provided to the feed port 16. The raw material supply device 13 may be another publicly known member such as a pusher or a vibrating feeder. The number or positions of arrangement of the raw material supply devices 13 can be appropriately changed depending on, for example, a size of the melting furnace 10.

A discharge port 18 for discharging the molten glass Gm is formed in the rear wall part 12b of the melting furnace 10. A transfer flow passage 19 is connected to the discharge port 18, and the molten glass Gm, which has reached a downstream end of the melting furnace 10, is successively transferred to a subsequent step (for example, a fining step) through the transfer flow passage 19. Although not shown, when glass articles are simultaneously manufactured at a plurality of locations, the melting furnace 10 may have discharge ports 18 formed at a plurality of positions so that the molten glass Gm is transferred to a subsequent step through the transfer flow passages 19 connected to the discharge ports 18 formed at the plurality of positions, respectively.

A plurality of burners 20 serving as the heating device 14 are provided to the side wall parts 12c of the melting furnace 10 on both sides. The heating device 14 is configured to burn fuel to form a flame F. The flame F formed by each of the burners 20 heats at least one of the glass raw materials Gr or the molten glass Gm from a position above a liquid surface of the molten glass Gm. The number or positions of arrangement of the burners 20 can be appropriately changed depending on, for example, the size of the melting furnace 10.

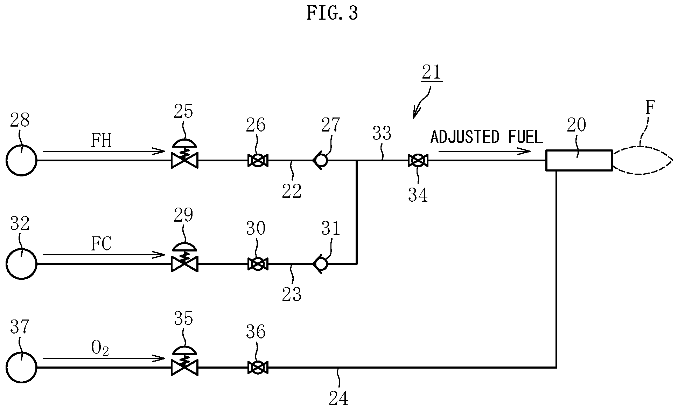

As illustrated in FIG. 3, a fuel supply passage 21 for supplying fuel or the like is connected to each of the burners 20. The fuel supply passage 21 comprises at least a hydrogen fuel pipe 22 for supplying a hydrogen fuel (corresponding to fuel containing hydrogen according to the present invention) FH. In this embodiment, the fuel supply passage 21 further comprises a hydrocarbon fuel pipe 23 for supplying a hydrocarbon fuel FC and a combustion-supporting gas pipe 24 for supplying oxygen serving as a combustion-supporting gas.

A flow rate adjustment valve 25, a switching valve 26, and a check valve 27 are provided to the hydrogen fuel pipe 22. The flow rate adjustment valve 25 is configured to adjust a flow rate of the hydrogen fuel FH. The switching valve 26 is configured to switch opening and closing of a flow passage for the hydrogen fuel FH flowing at the adjusted flow rate. The check valve 27 is configured to prevent backflow of fuel such as the hydrogen fuel FH. A hydrogen fuel source 28 is connected to an upstream end of the hydrogen fuel pipe 22.

A flow rate adjustment valve 29, a switching valve 30, and a check valve 31 are provided to the hydrocarbon fuel pipe 23. The flow rate adjustment valve 29 is configured to adjust a flow rate of the hydrocarbon fuel FC. The switching valve 30 is configured to switch opening and closing of a flow passage for the hydrocarbon fuel FC flowing at the adjusted flow rate. The check valve 31 is configured to prevent backflow of fuel such as the hydrocarbon fuel FC. A hydrocarbon fuel source 32 is connected to an upstream end of the hydrocarbon fuel pipe 23. For example, butane, propane, a petroleum gas, a natural gas, or the like can be used as the hydrocarbon fuel FC. In view of a further reduction in carbon dioxide contained in the exhaust gas, it is preferred that a natural gas be used as the hydrocarbon fuel FC.

A downstream end of the hydrogen fuel pipe 22 and a downstream end of the hydrocarbon fuel pipe 23 are connected to each other and are connected to the burner 20 through intermediation of a common fuel pipe 33. An adjusted fuel flows through the common fuel pipe 33. The adjusted fuel contains the hydrogen fuel FH and the hydrocarbon fuel FC at a mixing ratio adjusted by the flow rate control valves 25 and 29 and/or the switching valves 26 and 30. A switching valve 34 is provided to the common fuel pipe 33. The switching valve 34 is configured to switch opening and closing of a flow passage for the adjusted fuel.

In view of a reduction in carbon dioxide contained in the exhaust gas, it is preferred that the adjusted fuel contain the hydrogen fuel FH at 50 wt% or more, more preferably contain the hydrogen fuel FH at 70 wt% or more, still more preferably contain the hydrogen fuel FH at 90 wt% or more, most preferably consist of only the hydrogen fuel FH, i.e., without containing the hydrocarbon fuel FC. Further, as a content of the hydrogen fuel FH increases, the water vapor partial pressure Pp rises and thus it becomes more difficult to set the water vapor partial pressure Pp in the melting space 11 to 80% or less. Thus, the effect of the present invention becomes more noticeable.

A flow rate adjustment valve 35 and a switching valve 36 are provided to the combustion-supporting gas pipe 24. The flow rate adjustment valve 35 is configured to adjust a flow rate of oxygen. The switching valve 36 is configured to switch opening and closing of a flow passage for oxygen flowing at the adjusted flow rate. An oxygen source 37 is connected to an upstream end of the combustion-supporting gas pipe 24. The burner 20 is connected to a downstream end of the combustion-supporting gas pipe 24. The supply of oxygen to the burner 20 through the combustion-supporting gas pipe 24 allows mixture of the adjusted fuel with oxygen to make the adjusted fuel more easily combustible. As a result, a temperature of the flame F formed by the burner 20 is easily raised. Air may be used in place of oxygen as the combustion-supporting gas. Further, when oxygen is used as the combustion-supporting gas, an oxygen concentration can be set to 50 wt% or higher, preferably 70% by mass or higher, more preferably 90% wt% or higher. As the oxygen concentration increases, the fuel becomes more easily combustible. Hence, the temperature of the flame F formed by the burner 20 is easily raised.

It is preferred that each of the burners 20 be a multistage combustion burner. The multistage combustion burner comprises, for example, a main nozzle and a staging nozzle (not shown). The main nozzle is configured to inject a mixed gas of, for example, the fuel and the combustion-supporting gas. The staging nozzle is configured to inject the combustion-supporting gas. The mixed gas injected from the main nozzle is obtained by mixing the fuel and the combustion-supporting gas so that the combustion-supporting gas is insufficient for the fuel. Thus, a large part of the fuel contained in the mixed gas injected from the main nozzle reacts with the combustion-supporting gas contained in the mixed gas and combusts. The remaining fuel reacts with the combustion-supporting gas injected from the staging nozzle and combusts. When the multistage combustion described above is used, the flame becomes longer and a temperature of the flame decreases. As a result, a concentration of nitrogen oxides in the exhaust gas can be reduced.

Further, in this embodiment, a plurality of rodshaped electrodes 38 corresponding to the heating device 15 are provided to the bottom wall part 12d of the melting furnace 10. The electrodes 38 heat the molten glass Gm through application of a current under a state in which the electrodes 38 are immersed in the molten glass Gm. The number of (one or two or more) electrodes 38 can be appropriately changed depending on, for example, the size or a shape of the melting furnace 10. A shape of each of the electrodes 38 may be any suitable shape, for example, a sheet-like shape. In principle, the electrodes 38 may be arranged in any suitable manner. For example, although not shown, the electrodes 38 may be arranged on lower parts of the side wall parts 12c. In this embodiment, at least one of the molten glass Gm or the glass raw materials Gr is heated by using the burners 20 and the electrodes 38 in combination. The electrodes 38 may be omitted depending on the case. As a matter of course, in view of improvement in energy efficiency, it is preferred that the electrodes 38 be also used so as to curtail outputs of the burners 20.

A partial pressure measurement device 39 configured to measure the water vapor partial pressure Pp in the melting space 11 is disposed on the melting furnace 10. The partial pressure measurement device 39 comprises, for example, a pressure gauge 40, a hygrometer 41, a thermometer 42, and a computing device 43. The computing device 43 can calculate the water vapor partial pressure Pp (for example, a ratio to the total atmospheric pressure Pt) in the melting space 11 based on an atmospheric pressure (total atmospheric pressure Pt), a humidity, and a temperature in the melting space 11, which are measured by the pressure gauge 40, the hygrometer 41, and the thermometer 42. In this embodiment, the pressure gauge 40, the hygrometer 41, and the thermometer 42 of the partial pressure measurement device 39, which are disposed on the side wall part 12c of the melting furnace 10, are exemplified (see FIG. 2). However, as a matter of course, a part or all of the pressure gauge 40, the hygrometer 41, and the thermometer 42 may be disposed at another position (for example, on the top wall part 12e or on an upstream side of a gas duct). The water vapor partial pressure Pp may be calculated from a composition of the exhaust gas or a measurement value of, for example, a flow rate of the exhaust gas or a flow rate of the adjusted fuel.

A trend of the water vapor partial pressure Pp may be obtained in a simplified manner through a calculation performed by the partial pressure measurement device 39 or a calculation from the measurement value. In the present invention, a water amount (% by volume) in the exhaust gas is measured in compliance with JIS Z8808: 2013, 7.1: a method using a moisture absorption tube, and a value of the measured water amount (% by volume) is used as the water vapor partial pressure Pp in the melting space 11 in determination of whether the water vapor partial pressure in the melting furnace is 80% or less of the total atmospheric pressure. In this case, a measurement point is set to a point close to a center of a cross section of an exhaust port formed in the melting furnace 10.

Further, in this embodiment, a gas supply device 44 configured to supply gas (for example, an atmospheric air, a dry air, a clean dry air, or oxygen) K into the melting space 11 is disposed on the melting furnace 10. The gas supply device 44 has a supply port 45 with its opening communicating with the melting space 11. The gas K can be supplied into the melting space 11 through the supply port 45. The amount of supply of the gas K can be adjusted by a flow rate adjustment device (not shown) such as an adjustment valve.

Next, a manufacturing method for a glass article using the manufacturing apparatus having the above-mentioned configuration is described.

The manufacturing method for a glass article according to this embodiment comprises the melting step S1 as described above. The manufacturing method further comprises, as required, a fining step of performing a fining treatment on the molten glass Gm obtained in the melting step S1, a homogenization step of homogenizing, for example, by stirring the molten glass Gm that has undergone the melting step S1, and a forming step of forming the molten glass Gm that has undergone the homogenization step into glass articles.

As illustrated in FIG. 1 and FIG. 2, in the melting step S1, the glass raw materials Gr, which are continuously fed at a constant flow rate into the melting space 11 inside the melting furnace 10, are heated and molten by using the burners 20, each burning the fuel to form the flame F. In this embodiment, in the melting step S1, the glass raw materials Gr are heated through the combustion caused by the burners 20, and the glass raw materials Gr and/or the molten glass Gm is also heated through application of a current with the electrodes 38 in view of improvement in energy efficiency or the like.

At the time of the combustion caused by the burners 20, the hydrogen fuel FH is used as the fuel. Further, the water vapor partial pressure Pp in the melting space 11 is set to 80% or less of the total atmospheric pressure Pt.

In this case, it is preferred that the water vapor partial pressure Pp in the melting space 11 be reduced by supplying the gas K into the melting space 11 through the supply port 45 of the gas supply device 44 in order to set the water vapor partial pressure Pp in the melting space 11 to 80% or less of the total atmospheric pressure Pt. Further, it is preferred that the water vapor partial pressure Pp in the melting space 11 be reduced by generating carbon dioxide along with the heating and melting of the glass raw materials Gr through the use of the glass raw materials Gr containing the carbonate. A large amount of gas K is required to be supplied when the water vapor partial pressure Pp in the melting space 11 is reduced to less than 30% by supplying the gas K into the melting space 11. In such a case, a temperature of the atmosphere in the melting space 11 is decreased. As a **result,** the energy efficiency is reduced or bubbles in a foam layer BL are less likely to burst, which may result in an increase in the thickness of the foam layer BL. With the method of reducing the water vapor partial pressure Pp in the melting space 11 through the use of the glass raw materials Gr containing the carbonate, a content of the carbonate in the glass raw materials is limited depending on a CaO content of a glass composition. Thus, it is preferred that the water vapor partial pressure Pp in the melting space 11 be set to 30% or more.

Further, at this time, it is preferred that a batch layer GBL and the foam layer BL cover 80% to 100%, more preferably 90% to 100%, still more preferably 95% to 100% of a surface of the molten glass Gm. The batch layer GBL corresponds to the glass raw materials Gr fed into the melting space 11 inside the melting furnace 10. The foam layer BL is formed along with the heating and melting of the glass raw materials Gr. Meanwhile, it is preferred that the batch layer GBL corresponding to the glass raw materials Gr fed into the melting space 11 inside the melting furnace 10 cover 20% to 70% of the surface of the molten glass Gm.

It is preferred that a maximum thickness dimension BL of the foam layer formed along with the heating and melting of the glass raw materials be 50 mm or smaller, more preferably 45 mm or smaller, still more preferably 40 mm or smaller. A lower limit of the maximum thickness dimension can be set to 10 mm or larger. It is preferred that the lower limit be set to 15 mm or larger.

As described above, with the manufacturing method for a glass article according to this embodiment, the glass raw materials Gr fed into the melting space 11 are heated and molten through the combustion of the hydrogen fuel FH in the melting step S1. Thus, carbon dioxide contained in the exhaust gas generated in the melting step S1 can be reduced. Further, in the melting step S1, the water vapor partial pressure Pp in the melting furnace 10 is set to 80% or less of the total atmospheric pressure Pt. Thus, the expansion of the foam layer BL (see FIG. 1) formed on the molten glass Gm can be suppressed. As a result, a reduction in energy efficiency can be suppressed.

One embodiment of the present invention has been described. The manufacturing method for a glass article according to the present invention is not limited to that described above in the embodiment, and various modifications are possible within the scope of the present invention.

In the embodiment described above, the water vapor partial pressure Pp in the melting space 11 is reduced by using the gas supply device 44 and/or the glass raw materials Gr containing the carbonate. However, the water vapor partial pressure Pp in the melting space 11 may be reduced by adjusting a ratio of use (mixing ratio) between the hydrogen fuel FH and the hydrocarbon fuel FC. Also in this case, it is preferred that the water vapor partial pressure Pp in the melting space 11 be set to 30% or more.

The gas supply device 44 is used in the embodiment described above. However, an exhaust device (not shown) configured to discharge gas in the melting space 11 may be used in place of or in addition to the gas supply device 44. When the exhaust device is used, an observation hole formed in the side wall of the melting furnace, a joint between refractories, or the like may be used as a gas supply port.

### Example 1

Now, examples of the manufacturing method for a glass article according to the present invention is described. The following examples are mere exemplification, and the present invention is not limited to the following examples by any means.

In examples (Tests No. 1 to No. 3 and No. 5 to No. 7) according to the present invention, glass raw materials (glass raw materials of E-glass) containing CaCO₃ as carbonate were supplied into the melting furnace and were heated and molten in the melting furnace to generate a molten glass. At this time, the water vapor partial pressure in the melting furnace was adjusted to 80% or less by adjusting the amount of atmospheric air supplied into the melting furnace.

Further, in comparative examples (Tests No. 4 and No. 8), the supply of the atmospheric air into the melting furnace was stopped, and glass raw materials (glass raw materials of E-glass) containing CaO in place of CaCO₃ were supplied into the melting furnace. As a result, the water vapor partial pressure in the melting furnace became equal to 80% or more.

In any of the tests, a flow rate of the glass raw materials to be fed was set constant, a flow rate of the hydrogen fuel supplied to the burners was set to 20 Nm³/h, and a flow rate of oxygen serving as the combustion-supporting gas was set to 10 Nm³/h. Further, a heat generation amount from the electrodes was set constant. The water vapor partial pressure in the melting furnace, the maximum thickness dimension of the foam layer, and a temperature of the molten glass were measured under a steady state. In the melting furnace, the batch layer and the foam layer were covering 100% of a surface of the molten glass. A CaO content of resultant glass articles was 25 wt%. The glass raw materials with the SO₃ content of 800 wtppm were used in Tests No. 1 to No. 4, and the glass raw materials with the SO₃ content of 300 wtppm were used in Tests No. 5 to No. 8. In Table 1, test conditions and measurement results are shown.

**[Table 1]**

| Category | Test No. | Atmospheric air supply | CaO source | SO₃ content [wtppm] | Water vapor partial pressure [%] | Thickness of foam layer [mm] | Temperature of molten glass [°C] |
|---|---|---|---|---|---|---|---|
| Example | 1 | With | CaCO₃ | 800 | 30 | 40 | 1,250 |
| Example | 2 | With | CaCO₃ | 800 | 45 | 30 | 1,280 |
| Example | 3 | With | CaCO₃ | 800 | 70 | 40 | 1,270 |
| Comparative Example | 4 | Without | CaO | 800 | 90 | 80 | 1,200 |
| Example | 5 | With | CaCO₃ | 300 | 30 | 28 | 1,290 |
| Example | 6 | With | CaCO₃ | 300 | 40 | 22 | 1,320 |
| Example | 7 | With | CaCO₃ | 300 | 70 | 26 | 1,310 |
| Comparative Example | 8 | Without | CaO | 300 | 90 | 60 | 1,230 |

In comparative examples (Tests No. 4 and No. 8), the supply of the atmospheric air into the melting furnace was stopped, the glass raw materials containing CaO in place of CaCO₃ were used, and the water vapor partial pressure had a numerical value exceeding 80% of the total atmospheric pressure. In this case, the maximum thickness dimension of the foam layer increased along with the expansion of the foam layer and exceeded 50 mm. Heat of the flames formed by the burners was less likely to be conducted to the molten glass via the foam layer, and the temperature of the molten glass was decreased.

Meanwhile, in the examples (Tests No. 1 to No. 3 and No. 5 to No. 7), the water vapor partial pressure was reduced by using the glass raw materials containing CaCO₃. Further, in the examples, the water vapor partial pressure was adjusted to 80% or less of the total atmospheric pressure by supplying the atmospheric air into the melting furnace. Thus, the maximum thickness dimension of the foam layer was 50 mm or smaller, and the expansion of the foam layer was successfully suppressed. Thus, the temperature of the molten glass was increased. Those results revealed that the expansion of the foam layer can be suppressed by setting the water vapor partial pressure to 80% or less of the total atmospheric pressure and, as a result, a reduction in energy efficiency can be suppressed.

The glass raw materials with the SO₃ content of 800 wtppm were used in Tests No. 1 to No. 4, and the glass raw materials with the SO₃ content of 300 wtppm were used in Tests No. 5 to No. 8. When compared under a condition in which the water vapor partial pressure was substantially the same, the maximum thickness dimension of the foam layer was smaller in Tests No. 5 to No. 8 in which the SO₃ content was set to 300 wtppm than in Tests No. 1 to No. 4. These results revealed that the maximum thickness dimension of the foam layer can be decreased by reducing the SO₃ content.

### Reference Signs List

10 melting furnace
11 melting space
12a to 12e wall part
13 raw material supply device
14,15 heating device
16 feed port
17 screw feeder
18 discharge port
19 transfer flow passage
20 burner
21 fuel supply passage
22 hydrogen fuel pipe
23 hydrocarbon fuel pipe
24 combustion-supporting gas pipe
25,29,35 flow rate adjustment valve
26,30,34,36 switching valve
27,31 check valve
28 oxygen fuel source
32 hydrocarbon fuel source
33 common fuel pipe
37 oxygen source
38 electrode
39 partial pressure measurement device
40 pressure gauge
41 hygrometer
42 thermometer
43 computing device
44 gas supply device
45 supply port
BL foam layer
F flame
FC hydrocarbon fuel
FH hydrogen fuel
GBL batch layer
Gm molten glass
Gr glass raw material
K gas
t thickness dimension

## Claims

1. A manufacturing method for a glass article, comprising a melting step of generating a molten glass by heating and melting glass raw materials corresponding to raw materials for a glass article in a melting furnace,
wherein, in the melting step, the glass raw materials are heated and molten through combustion of fuel containing hydrogen, and a water vapor partial pressure in the melting furnace is set to 80% or less of a total atmospheric pressure.

2. The manufacturing method for a glass article according to claim 1, wherein the glass raw materials contain carbonate.

3. The manufacturing method for a glass article according to claim 2,
wherein the glass raw materials contain CaCO₃ as the carbonate, and
wherein the glass raw materials are prepared so that the glass article has a composition with CaO at 5 wt% to 35 wt%.

4. The manufacturing method for a glass article according to any one of claims 1 to 3, wherein the glass raw materials contain SO₃ at 1,000 wtppm or less.

5. The manufacturing method for a glass article according to any one of claims 1 to 3, wherein, in the melting step, gas is supplied into the melting furnace.

6. The manufacturing method for a glass article according to any one of claims 1 to 3, wherein, in the melting step, a mixed fuel containing the hydrogen and a hydrocarbon fuel is used as the fuel.

7. The manufacturing method for a glass article according to any one of claims 1 to 3, wherein, in the melting step, a maximum thickness dimension of a foam layer formed along with heating and melting of the glass raw materials is set to 50 mm or smaller.

8. The manufacturing method for a glass article according to any one of claims 1 to 3, wherein, in the melting step, a batch layer corresponding to the glass raw materials supplied into the melting furnace and a foam layer formed along with heating and melting of the glass raw materials cover 80% to 100% of a surface of the molten glass.

9. The manufacturing method for a glass article according to any one of claims 1 to 3, wherein a batch layer corresponding to the glass raw materials supplied into the melting furnace covers 20% to 70% of a surface of the molten glass.

10. The manufacturing method for a glass article according to any one of claims 1 to 3, wherein, in the melting step, the fuel containing hydrogen is subjected to multistage combustion.
